# EUROPEAN PATENT SPECIFICATION

(11) **EP 2 581 644 B1**
(45) Date of publication and mention of the grant of the patent: **21.03.2018**
(21) Application number: 11184491.6
(22) Date of filing: 10.10.2011
(51) Int. Cl.: B64F 1/20, F21W 111/04, F21W 111/06, F21Y 115/10, F21S 8/00

(54) **LED approach light**
LED-Anflugfeuer
Lumière d'approche DEL

(43) Date of publication of application: 17.04.2013
(73) Proprietor: Induperm A/S, 4800 Nykøbing Falster (DK)
(72) Inventor: Baran, Adam, 59555 Lippstadt (DE); Rupprath, Bernhard, 59556 Lippstadt (DE)
(74) Representative: Lohr, Georg

(56) References cited:
- EP-A1- 2 354 635
- CN-Y- 201 066 108
- DE-A1-102008 052 869
- FR-A1- 2 797 940
- US-A1- 2007 013 557
- US-A1- 2008 062 691
- US-A1- 2009 016 069
- US-A1- 2010 046 226
- US-A1- 2011 233 568
- US-B1- 6 354 714
- US-B1- 6 431 728

## Description

### Field of the invention

The invention relates to a LED airport lights, preferably used as approach centerline lights or crossbar lights. It also relates to a method for emulating an elliptical radiation pattern.

### Description of the related art

LED (light emitting diode) lighting systems offer significant advantages over traditional incandescent, HID and fluorescent lamps. LEDs are of smaller size, offer higher reliability, longer operational life and lower energy consumption. This is specifically important for airport lighting systems where high reliability and robustness is required. However, there are specific requirements when using LEDs. As increased operating temperature significantly reduces lifetime, cooling is of high importance. Furthermore, most LED chips are approximately isotropic light sources with a lambertian light distribution, which must be adapted to specific requirements of a lighting system.

Most airport lights, specifically approach centerline lights or crossbar lights have tightly specified radiation patterns. In general these have to comply with the ICAO standards.

In the US patent publication US 6,932,496 B2 a LED-based elevated omnidirectional airfield light is disclosed. Light emitted by a centered LED is deflected radially by a mirror.

In the US patent publication US 7,988,345 B2 a projection module of an automobile headlight is disclosed. Light emitted by LEDs is collimated and focused by a plurality of cascaded lenses to form a specific radiation pattern. This system may be adapted to a plurality of radiation pattern. The drawback is the very high complexity and resulting thereof high manufacturing costs and low

US 6,354,741 B1 discloses an airport light with a housing covered by a transparent cover. In the housing are three LED-modules. Each LED module 100 has an H-shaped profile and the middle leg of the H-shaped profile supports a row of LEDs extending in the longitudinal direction of the H-shaped profile.

CN 20 10 66 108 Y relates to a LED light for billboard lighting having six curved boards each supporting a number of LEDs being aligned in a column. The boards are mounted one besides of the other to a convex surface of a support.

US 2010/046226 A discloses a lighting fixture for mounting to a lamppost. LEDs are mounted to the outer side of a section of the housing. The section has the shape of frustum of a cone. The light distribution on the ground is therefore a ring with vanishing intensity in the middle.

US 2011/233568 A relates to a light emitting diode (LED) street lamp having LEDs on a cylindrical shaped support with diffusing members in between of two neighbored LEDs to provide diffused light.

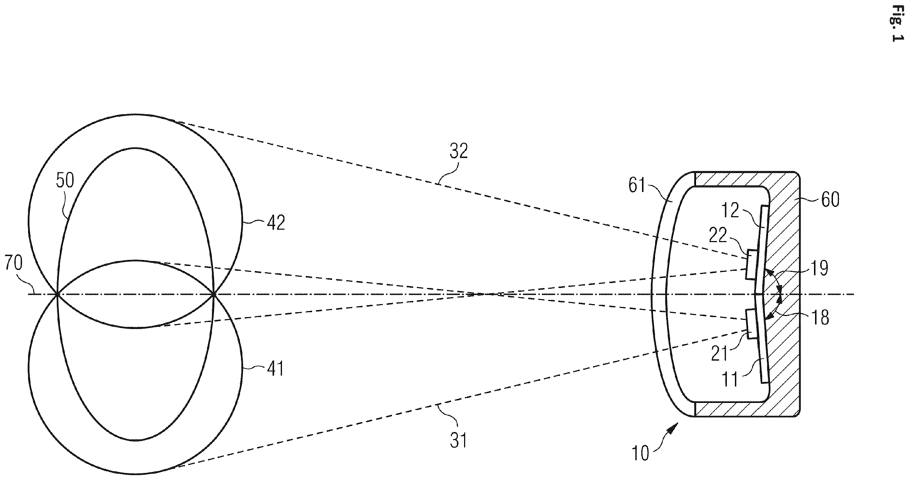

DE/10 2008 052 869 A1 discloses in Fig. 1 a streetlight with a free form surface to which LEDs are attached in rows having different numbers of LEDs.

US 2008/0062691 suggests a LED lighting fixture for consumer applications or street lighting comprising a panel and a number of LEDS mounted to a planar surface of the panel, wherein one or more of the LEDs are mounted at an angle to the planar surface to thereby achieve a desired lighting pattern.

US 2007/0013557 A1 suggests an airport light having a number of LEDs, each for emitting a light beam, which is formed by beam transformers, wherein each transformer is positioned in a path of a beam for individually controlling a set of beam properties of the respective beam.

### Summary of the invention

The problem to be solved by the invention is to provide a LED based airport light having a radiation pattern suitable for airport lights, like approach centerline lights or crossbar lights, further having high optical power, high reliability and lifetime. Furthermore, the solution should be inexpensive and suitable for manufacturing in large volumes. A further problem to be solved is to provide an elliptical radiation pattern without complex lenses and mirrors.

Solutions of the problem are described in the independent claims. The dependent claims relate to further improvements of the invention.

According to the invention an airport light has at least first and second LEDs forming at least two light beams. The first LEDs are mounted to a first module while the second LEDs are mounted to a second module. The first module and the second module are mounted in an angle against each other. The LEDs thus emit non-parallel light beams. The angle between the modules is selected such, that the light beams of first LEDs and second LEDs partially overlap and thereby approximate an elliptical radiation pattern. The preferred angle between the modules is in the range of 6° to 30°. In a preferred embodiment the angle between the modules is 8°. This is specifically preferred when using LEDs with an angle of +- 6° (equals 12° total) for 50% decrease of luminosity. This allows a simple and in expensive arrangement without complex and expensive optical means like lenses or reflectors. Although the resulting elliptical pattern is not perfect, it meets the minimum luminosity requirements of airfield lighting specifications like these issued by ICAO. In general the first and second modules may be any type of electronic module holding LEDs. In a very simple embodiment they may be printed circuit boards. They may also be mechanically structures holding the LEDs, while the LEDs are electrically connected by discrete wires or a printed circuit board, preferably a flexible printed circuit board. In a preferred embodiment, there is only one type of electronic module required. It is only necessary to mount the second module under an angle and rotated at 180° against the first module. The first and second modules are contained within a housing which preferably is made of metal to achieve good thermal conductivity. It preferably has a transparent cover which preferably is made of glass.

In another embodiment additional modules are provided. With further modules the luminosity can be increased. Furthermore the beam can be extended. For example it is possible to produce a comparatively broad and narrow ellipsis. Further modules may be arranged horizontally, vertically, or like a matrix.

In a preferred embodiment at least one of the first and second LEDs comprise of a plurality of LEDs, most preferably of 3 LEDs. For an improved approximation of the elliptical radiation pattern it is preferred, if the individual LEDs within at least one of first and second LEDs have slightly divergent light beams related to each other. This is also applicable to further modules.

In a further embodiment the housing has a module holder for holding the first of the second modules under the required angle. To adapt the radiation pattern to individual requirements only the module holder has to be changed. As the modules, or electronic modules have not to be changed, they can be manufactured in large quantities thus reducing manufacturing costs.

Another aspect of the invention relates to a method for emulating an elliptical radiation pattern by LEDs which typically have a circular radiation pattern. The method comprises arranging first LEDs and second LEDs under an angle to obtain a first beam of light from the first LEDs and a second beam of light from the second LEDs. The first beam of light and the second beam of light are under the angle and form at least partially overlapping radiation patterns. Preferably the angle between the first and second LEDS is in the range of 6° to 30 °.

In a preferred embodiment each of the LEDs is mounted at an individual module, and the modules are arranged under an angle relative to each other, defining the angle between the LEDs.

In another embodiment additional modules are provided. With further modules the luminosity can be increased. Furthermore the beam can be extended. For example it is possible to produce a comparatively broad and narrow ellipsis.

In a further embodiment, at least one of the first and second LEDs comprise of a plurality of LEDs, most preferably of 3 LEDs. For an improved approximation of the elliptical radiation pattern it is preferred, if the individual LEDs within at least one of first and second LEDs have slightly divergent light beams related to each other. This is also applicable to further modules.

### Description of Drawings

In the following the invention will be described by way of example, without limitation of the general inventive concept, on examples of embodiment with reference to the drawings.
Figure 1 shows an embodiment of the invention.
Figure 2 shows a radiation pattern as required by standards.
Figure 3 shows the approximation of an elliptical radiation pattern by circular radiation patterns.
Figure 4 shows the light beams approximating an elliptical radiation pattern.
Figure 5 shows an exemplary arrangement of LEDs.

An embodiment of the invention is shown in figure 1. The airport light 10 comprises a housing 60 which preferably is made of metal like aluminum to provide a good thermal conductivity. The housing is closed by a transparent cover 61 which preferably is made of glass. Inside the housing are a first module 11 and a second module 12. The first module 11 holds first LEDs 21, while the second module 12 holds second LEDs 22. There may be additional electronic components like resistors, diodes or LED drivers on the modules. The first module 11 and the second module 12 are mounted under an angle against each other. This results in a first angle 18 between the first module 11 and a center axis 70 different from 90°. Furthermore the second angle 19 between the second module 12 and the center axis 70 is also different from 90°. As shown herein both angles are smaller than 90°. The angles may also be larger than 90°. The deviation of the angles from 90° is preferably in a range from 3° to 15°, resulting in an angle between the boards in a range from 6° to 30°. Most preferably the deviation is between 5° and 10°. The angles of the modules define the radiation angles of the LEDs attached thereto with respect to the center axis 70. The light beam 31 of first LEDs 21 result in first LEDs radiation pattern 41. The light beam 32 of second LED 22 recited in second LEDs radiation pattern 42. By superimposing the first and the second radiation pattern, the minimum required luminosity as shown by the elliptical radiation pattern 50 can be maintained.

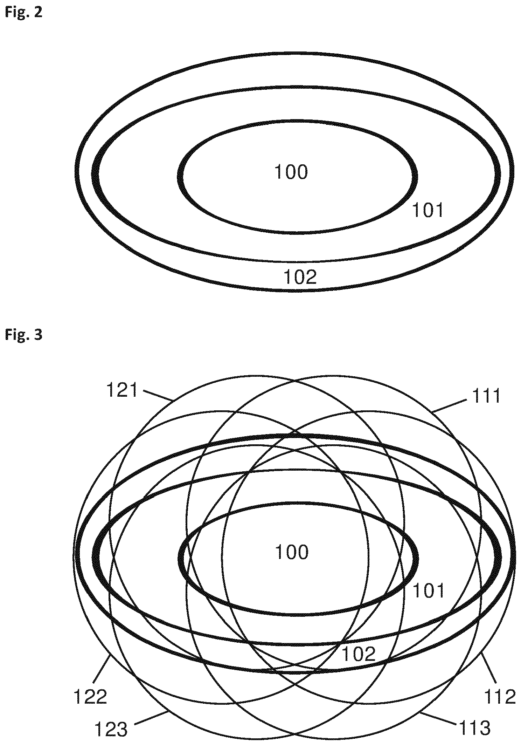

In figure 2 a radiation pattern is shown as required by ICAO standards for approach centerline lights and for crossbar lights. The main beam 100 has an elliptical shape and is within a horizontal angular range of -10 degrees (left side) to +10 degrees (right side). The vertical range is from 2.5 degrees above ground (bottom) to 13.5 degrees. The luminosity of the main beam must not exceed 10000cd. There further a first outer beam 101 and a second outer beam 102. The luminosity is decreasing from the main beam to the outer beams.

Figure 3 shows the approximation of the above elliptical radiation pattern by two groups of circular radiation patterns. The first group of circular radiation patterns comprises radiation patterns 111, 112 and 113 which are generated by first LEDs 21. The second group of circular radiation patterns comprises radiation patterns 121, 122 and 1 to 3 which are generated by second LEDs 22. By superimposing the radiation of six LEDs a comparatively good approximation of the required elliptical radiation pattern can be achieved. For example in the center area of the main beam light of all six LEDs is superimposed, resulting in the highest luminosity. In the outer areas like in the area of second outer beam 102 there is light of the lower number of LEDs superimposed. For example at the right and the left side there is only light of one LED 112-or 122.

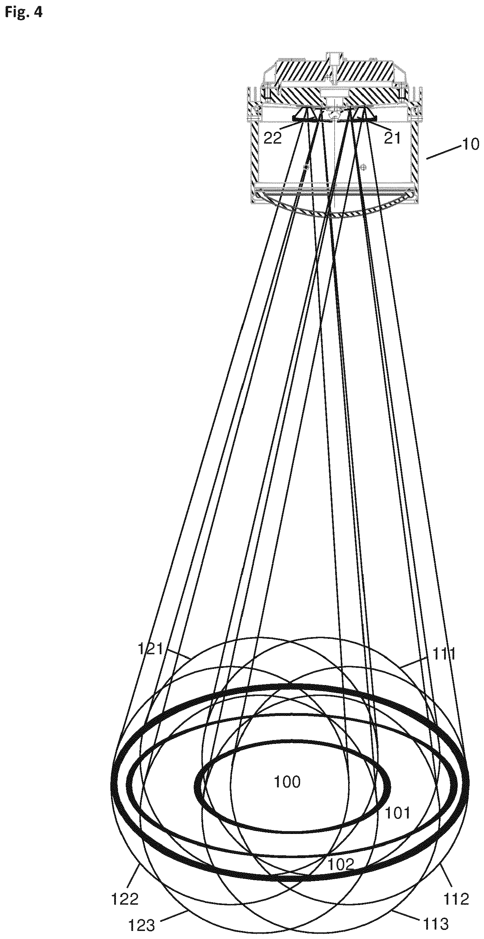

In figure 4 the light beams for the radiation pattern are shown. The light being emitted from the first LEDs 21 results in radiation patterns 111, 112 and 113. The light being emitted from the second LEDs 22 recited radiation pattern 121, 122 and 123.

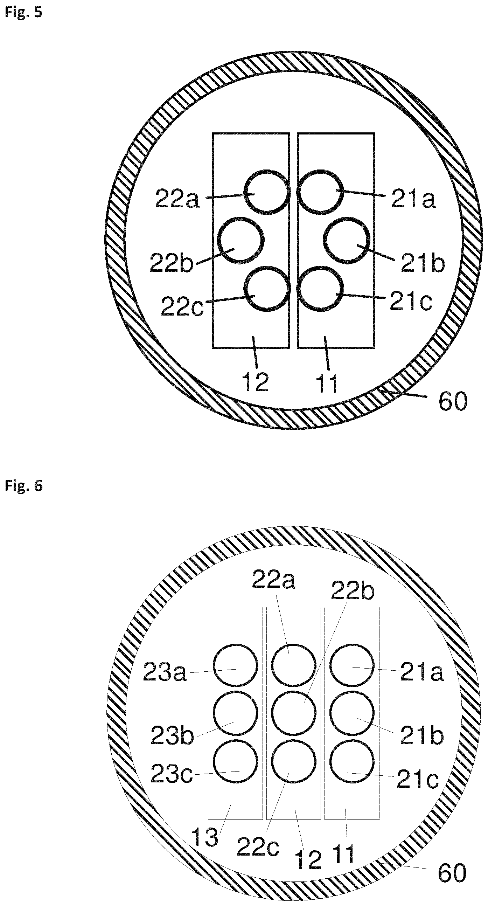

In figure 5 an exemplary arrangement of LEDs is shown. Here first LEDs 21a, 21b and 21c are arranged on first module 11. Second LEDs 22a, 22b and 22c are arranged on the second module 12. Such an arrangement of LEDs may produce a radiation pattern as described above.

In figure 6 an arrangement of 3 LED modules is shown. Here first LEDs 21a, 21b and 21c are arranged on first module 11. Second LEDs 22a, 22b and 22c are arranged on the second 20 circuit board 12. Third LEDs 23a, 23b and 23c are arranged on the third module 13.Such an arrangement of LEDs may produce a broader radiation pattern as described above.

### List of reference numerals

- 10: airport light
- 11: first module
- 12: second module
- 13: third module
- 18: first angle
- 19: second angle
- 21: first LEDs
- 22: second LEDs
- 23: third LEDs
- 31: beam of light by first LEDs
- 32: beam of light by second LEDs
- 41: first LEDs radiation pattern
- 42: second LEDs radiation pattern
- 50: required elliptical radiation pattern
- 60: housing
- 61: transparent cover
- 70: center axis
- 100: main beam
- 101: first outer beam
- 102: second outer beam
- 111, 112, 113: radiation patterns of first LEDs
- 121, 122, 123: radiation patterns of second LEDs

## Claims

1. An airport light (10) for approach centerline lighting or crossbar lighting having a main beam with an elliptical shape having an horizontal angular range of -10 degrees to +10 degrees and a vertical range from 2.5 degrees above ground to 13.5 degrees with a luminosity not exceeding 10000cd and further having first and second outer beams (101, 102) wherein the luminosity decreases from the main beam to the outer beams (101, 102) the airport light comprising at least
a housing (60) covered by a transparent cover (61) and containing a first module (11) with first LEDs (21), generating a first beam of light (31), and a second module (12) with a second LEDs (22), generating a second beam of light (32), wherein at least the first LEDs (21) and/or the second LEDs (22) comprise of a plurality of LEDs and wherein
the first module (11) is mounted under an angle to the second module (12) resulting in a non-parallel and partially overlapping first beam of light (31) and a second beam of light (32),
**characterized in that** the partially overlapping beams of light approximate an elliptical radiation pattern.

2. The airport light (10) according to claim 1,
**characterized in that**
at least a third module (13) with third LEDs (23) producing at least a third beam of light partially overlapping any one beam of another LED is provided.

3. The airport light (10) according to claim 1,
**characterized in that**
at least the first LEDs (21) and the second LEDs (22) each comprise of three LEDs.

4. The airport light (10) according to any one of the preceding claims,
**characterized in that**
the housing (60) comprises metal.

5. A method for emulating an elliptical radiation pattern as required for approach centerline lights and/or crossbar lights having a main beam with an elliptical shape having an horizontal angular range of -10 degrees to +10 degrees and a vertical range from 2.5 degrees above ground to 13.5 degrees with a luminosity not exceeding 10000cd and further having first and second outer beams (101, 102) wherein the luminosity decreases from the main beam to the outer beams (101, 102) by using LEDs (21, 22) having a circular radiation pattern, comprising the step of: arranging first LEDs (21) and second LEDs (22) under an angle to obtain a first beam of light (31) from the first LEDs and a second beam of light (32) from the second LEDs, wherein the first beam of light and the second beam of light at least partially overlap, wherein
at least the first LEDs (21) and/or the second LEDs (22) comprise of a plurality of LEDs,
each of the LEDs (21, 22) is mounted at an individual module (11, 12), and the modules (11, 12) are arranged under an angle relative to each other, defining the angle between the LEDs.

6. The method according to claim 5,
**characterized in that**
the angle between the first and second LEDs is in the range of 6° to 30 °.

7. The method according to any one of claims 5 or 6,
**characterized in that**
at least a third module (13) with third LEDs (23) producing at least a third beam of light partially overlapping any one beam of another LED is provided.

8. The method according to claim 5,
**characterized in that**
at least the first LEDs (21) and the second LEDs (22) each comprise of three LEDs.

## Patentansprüche

1. Flughafenlicht (10) für Anflug-Mittellinienbefeuerung oder -Querträgerbefeuerung aufweisend einen Hauptstrahl mit einer elliptischen Form mit einer horizontalen Winkelreichweite von -10 Grad bis +10 Grad und vertikalen Reichweite von 2,5 Grad über dem Boden bis 13,5 Grad mit einer Leuchtstärke von nicht mehr als 10000 cd, und weiterhin aufweisend erste und zweite äußere Strahlen (101, 102), wobei die Leuchtstärke vom Hauptstrahl zu den äußeren Strahlen (101, 102) abnimmt,
wobei das Flughafenlicht zumindest aufweist
ein Gehäuse (60), das von einer transparenten Abdeckung (61) bedeckt ist und ein erstes Modul (11) mit ersten LEDs (21) enthält, die einen ersten Lichtstrahl (31) erzeugen, und ein zweites Modul (12) mit zweiten LEDs (22), die einen zweiten Lichtstrahl (32) erzeugen, wobei zumindest die ersten LEDs (21) und/oder die zweiten LEDs (22) eine Mehrzahl von LEDs aufweisen, und
wobei
das erste Modul (11) unter einem Winkel zu dem zweiten Modul (12) befestigt ist, der einen nicht-parallelen und teilweise überlappenden ersten Lichtstrahl (31) und einen zweiten Lichtstrahl (32) ergibt,
wobei sich die teilweise überlappenden Lichtstrahlen einem elliptischen Strahlungsmuster annähern.

2. Flughafenlicht (10) nach Anspruch 1,
**dadurch gekennzeichnet, dass**
zumindest ein drittes Modul (13) mit dritten LEDs (23) vorgesehen ist, die zumindest einen dritten Lichtstrahl erzeugen, der teilweise einen beliebigen Strahl einer anderen LED überlappt.

3. Flughafenlicht (10) nach Anspruch 1,
**dadurch gekennzeichnet, dass**
zumindest die ersten LEDs (21) und die zweiten LEDs (22) jeweils auf drei LEDs bestehen.

4. Flughafenlicht (10) nach einem der vorhergehenden Ansprüche,
**dadurch gekennzeichnet, dass**
das Gehäuse (60) aus Metall besteht.

5. Verfahren zum Emulieren eines elliptischen Strahlungsmusters wie erforderlich für Anflug-Mittellinienbefeuerung oder -Querträgerbefeuerung aufweisend einen Hauptstrahl mit einer elliptischen Form mit einer horizontalen Winkelreichweite von -10 Grad bis +10 Grad und vertikalen Reichweite von 2,5 Grad über dem Boden bis 13,5 Grad mit einer Leuchtstärke von nicht mehr als 10000 cd, und weiterhin aufweisend erste und zweite äußere Strahlen (101, 102), wobei die Leuchtstärke vom Hauptstrahl zu den äußeren Strahlen (101, 102) abnimmt, unter Verwendung von LEDs (21, 22), die kreisförmige Strahlungsmuster haben, aufweisend den Schritt: Anordnen erster LEDs (21) und zweiter LEDs (22) unter einem Winkel, um einen ersten Lichtstrahl (31) von den ersten LEDs und einen zweiten Lichtstrahl (32) von den zweiten LEDs zu erhalten, wobei sich der erste Lichtstrahl und der zweite Lichtstrahl zumindest teilweise überlappen, wobei
zumindest die ersten LEDs (21) und/oder die zweiten LEDs (22) eine Mehrzahl von LEDs aufweisen,
wobei jede der LEDs (21, 22) an einem einzelnen Modul (11, 12) befestigt ist und die Module (11, 12) in einem Winkel relativ zueinander angeordnet sind, der den Winkel zwischen den LEDs definiert.

6. Verfahren nach Anspruch 5,
**dadurch gekennzeichnet, dass**
der Winkel zwischen den ersten und zweiten LEDs im Bereich von 6° bis 30° liegt.

7. Verfahren nach Anspruch 5 oder 6,
**dadurch gekennzeichnet, dass**
zumindest ein drittes Modul (13) mit dritten LEDs (23) bereitgestellt ist, die zumindest einen dritten Lichtstrahl erzeugen, der teilweise einen beliebigen Strahl einer anderen LED überlappt.

8. Verfahren nach Anspruch 5,
**dadurch gekennzeichnet, dass**
zumindest die ersten LEDs (21) und die zweiten LEDs (22) jeweils auf drei LEDs bestehen.

## Revendications

1. Feu d'aéroport (10) pour un éclairage de ligne d'approche ou un éclairage de barres transversales, présentant un faisceau principal de forme elliptique ayant une plage angulaire horizontale de -10 degrés à +10 degrés et une plage verticale de 2,5 degrés au-dessus du sol à 13,5 degrés avec une luminosité ne dépassant pas 10000 cd et présentant en outre des premier et deuxième faisceaux extérieurs (101, 102), la luminosité diminuant du faisceau principal vers les faisceaux extérieurs (101, 102),
lequel feu d'aéroport comprend au moins
un boîtier (60) couvert par un couvercle transparent (61) et contenant un premier module (11) avec de premières LED (21), générant un premier faisceau de lumière (31),
et un deuxième module (12) avec de deuxièmes LED (22), générant un deuxième faisceau de lumière (32), au moins les premières LED (21) et/ou les deuxièmes LED (22) étant constituées d'une pluralité de LED, et dans lequel
le premier module (11) est monté de manière à former un angle avec le deuxième module (12) de sorte qu'il en résulte un premier faisceau de lumière (31) et un deuxième faisceau de lumière (32) non parallèles et se chevauchant partiellement, dans lequel
les faisceaux de lumière se chevauchant partiellement s'approchent d'un diagramme de rayonnement elliptique.

2. Feu d'aéroport (10) selon la revendication 1,
**caractérisé en ce**
**qu'**au moins un troisième module (13) avec de troisièmes LED (23) produisant au moins un troisième faisceau de lumière qui chevauche partiellement tout faisceau d'une autre LED est prévu.

3. Feu d'aéroport (10) selon la revendication 1,
**caractérisé en ce**
**qu'**au moins les premières LED (21) et les deuxièmes LED (22) sont constituées chacune de trois LED.

4. Feu d'aéroport (10) selon l'une quelconque des revendications précédentes,
**caractérisé en ce**
**que** le boîtier (60) est constitué de métal.

5. Procédé d'émulation d'un diagramme de rayonnement elliptique tel que requis pour des feux de ligne d'approche et/ou des feux de barres transversales présentant un faisceau principal de forme elliptique ayant une plage angulaire horizontale de -10 degrés à +10 degrés et une plage verticale de 2,5 degrés au-dessus du sol à 13,5 degrés avec une luminosité ne dépassant pas 10000 cd et présentant en outre des premier et deuxième faisceaux extérieurs (101, 102), la luminosité diminuant du faisceau principal vers les faisceaux extérieurs (101, 102), en utilisant des LED (21, 22) ayant un diagramme de rayonnement circulaire, le procédé comprenant l'étape consistant à : disposer de premières LED (21) et de deuxièmes LED (22) selon un certain angle pour obtenir un premier faisceau de lumière (31) provenant des premières LED et un deuxième faisceau de lumière (32) provenant des deuxièmes LED, le premier faisceau de lumière et le deuxième faisceau de lumière se chevauchent au moins partiellement, dans lequel au moins les premières LED (21) et/ou les deuxièmes LED (22) sont constituées d'une pluralité de LED,
chacune des LED (21, 22) est montée sur un module individuel (11, 12)
et
les modules (11, 12) sont disposés de manière à former un angle l'un par rapport à l'autre, définissant l'angle entre les LED.

6. Procédé selon la revendication 5,
**caractérisé en ce**
**que** l'angle entre les premières et les deuxièmes LED est dans la plage de 6° à 30°.

7. Procédé selon l'une quelconque des revendications 5 ou 6,
**caractérisé en ce**
**qu'**au moins un troisième module (13) avec de troisièmes LED (23) produisant au moins un troisième faisceau de lumière qui chevauche partiellement quelconque faisceau d'une autre LED est prévu.

8. Procédé selon la revendication 5,
**caractérisé en ce**
**qu'**au moins les premières LED (21) et les deuxièmes LED (22) sont constituées chacune de trois LED.
